# EUROPÄISCHE PATENTSCHRIFT

(11) **EP 3 848 690 B1**
(45) Veröffentlichungstag und Bekanntmachung des Hinweises auf die Patenterteilung: **02.02.2022**
(21) Anmeldenummer: 20211806.3
(22) Anmeldetag: 04.12.2020
(51) Int. Cl.: G01M 3/28, E03B 7/07

(54) **WASSERSCHADENSCHUTZVORRICHTUNG, INSBESONDERE ZUR ERKENNUNG VON KLEINLECKAGEN**
WATER DAMAGE PROTECTION DEVICE, IN PARTICULAR FOR DETECTING SMALL LEAKAGES
DISPOSITIF DE PROTECTION CONTRE LES DÉGÂTS DES EAUX, EN PARTICULIER DE DÉTECTION DE PETITES FUITES

(30) Priorität: 09.01.2020 DE 202020100099 U
(43) Veröffentlichungstag der Anmeldung: 14.07.2021
(73) Patentinhaber: Judo Wasseraufbereitung GmbH, 71364 Winnenden (DE)
(72) Erfinder: MELCHER, Siegfried, 71720 Oberstenfeld (DE)
(74) Vertreter: Kohler Schmid Möbus Patentanwälte

(56) Entgegenhaltungen:
- EP-A1- 1 930 509
- WO-A1-2014/029699

## Beschreibung

Die Erfindung betrifft eine Vorrichtung zum automatischen Verschließen einer Schlauch- und/oder Rohrleitung für den Transport flüssiger oder gasförmiger Medien, insbesondere Wasser, umfassend
- ein Verschlussorgan,
- einen in Strömungsrichtung unmittelbar hinter dem Verschlussorgan angeordneten Turbinen- oder Flügelrad-Durchflussmesser,
- eine elektronische Steuervorrichtung, die im Betrieb Signale vom Turbinen- oder Flügelrad-Durchflussmesser erhält,
- einen Stellmotor, durch den das Verschlussorgan aufgrund von Signalen der elektronischen Steuervorrichtung bei Über- bzw. Unterschreiten eines vorgebbaren Grenzwertes geschlossen bzw. geöffnet werden kann.

Eine solche Vorrichtung ist aus der WO 2014/029699 A1 (=Referenz [1]) bekannt.

Schlauch- und/oder Rohrleitungssysteme für den Transport flüssiger oder gasförmiger Medien, insbesondere Wasser, werden in vielfältigen Anwendungen, etwa in der Industrie oder in der Landwirtschaft, aber auch im Bereich der häuslichen Wasserversorgung seit Jahrtausenden eingesetzt. Hauswasserinstallationen, insbesondere Wasserbehandlungsanlagen, sind weit verbreitet in Haushalten, werden aber auch in technischen Anlagen industriell eingesetzt. Oftmals wird behandeltes, insbesondere enthärtetes und/oder filtriertes Wasser gewünscht oder benötigt. Üblicherweise werden dafür Wasserenthärtungsanlagen und/oder Wasserfilter eingesetzt, vor allem bei Trinkwasserinstallationen.

An den Schläuchen beziehungsweise Rohren sowie den zugehörigen Armaturen, die ausgehend von derartigen Wasserinstallationen in die einzelnen Räume des betreffenden Gebäudes oder auch auf eine Terrasse oder in den Garten geführt sind, können unter widrigen -gleichwohl in der Praxis relativ häufig vorkommenden- Umständen Leckagen entstehen, welche außer zu Wasserverlust noch zu erheblichen weiteren Schäden führen können. Diese Wasserschäden gilt es zu vermeiden oder wenigstens zu minimieren.

DE 10 2011 055 642 A1, WO 2006/069930 A2 und DE 10 2012 211 132 A1 (=Referenzen [2a-c]) beschreiben Verfahren zur Erkennung von Leckagen und Vermeidung von Schäden durch Leckagen. Dabei werden Durchflüsse im Wasserzulauf und in der Nähe der einzelnen Entnahmestellen einer Wasserinstallation verglichen. Bei Unstimmigkeiten wird eine Absperrvorrichtung im Zulauf geschlossen bzw. ein Alarmsignal ausgegeben. Mit steigender Anzahl von Entnahmestellen werden entsprechend viele Durchflussmesser benötigt, was zu erhöhten Kosten, höherem Platzbedarf für die Anlage sowie größerer Ausfall- und Reparaturanfälligkeit führt.

DE 196 08 527 C2 und EP 0 794 381 B1 (=Referenzen [3a,b]) offenbaren eine Wasserschaden-Schutzvorrichtung, bei der ein Verschlussorgan in einer zentralen Zuleitung automatisch schließt, wenn entweder ein im Bodenbereich angeordneter Feuchtigkeitssensor Feuchtigkeit feststellt oder ein zentrales Volumenstrommessgerät eine Grenzwertüberschreitung registriert.

DE 195 08 114 C2 und EP 0 731 313 B1 (=Referenzen [4a,b]) beschreiben ein Verfahren zum Betrieb einer Wasserschadenschutzvorrichtung, bei welchem nach Überschreiten eines Grenzwerts für eine maximal zulässige Wasserentnahme zwar die Wasserzuleitung einer Anlage abgesperrt wird. Nach kurzer Zeit soll jedoch -quasi probehalber- die Leitung automatisch wieder geöffnet und dann dauerhaft offengehalten werden, wenn man festgestellt, dass der Grenzwert jetzt wieder zuverlässig unterschritten wird.

Durchflussmesser mit Turbinen bzw. Flügelrädern, bei denen zur Messung kleiner Durchsätze zusätzliche bewegbare mechanische Bauteile (etwa Klappen, Scheiben und dergleichen) integriert sind, werden beispielsweise in DE 44 03 178 C1, aber auch bereits in DE 385507 oder in DE 83598 (=Referenzen [5a-c]) beschrieben.

In der eingangs zitierten Referenz [1] wird eine Leckageschutz-Anordnung mit mehreren Einheiten vorgestellt, die über ein Netzwerk miteinander kommunizieren. Zur Erkennung kleiner Leckagen wird zeitweilig abgesperrt und ein Druckabfall bei Leckage mittels eines Drucksensors detektiert. Ebenso wird zur Erfassung kleinerer Strömungen vorgeschlagen, mittels Bypass und einem zweiten, empfindlicheren Strömungsmesser im Bypass kleine Strömungen zu erfassen. Ein dynamischer Widerstand, beispielsweise eine Klappe oder ein Rückflussverhinderer, soll bewirken, dass die Strömung bei kleinen Durchflussraten durch den Strömungsmesser im Bypass detektiert werden, während große Durchflussraten vom ersten Strömungsmesser in der Hauptleitung erfasst werden. Weiterhin kann die Strömung bei kleinen Durchflussraten mittels eines Bypasses einen Rückflussverhinderer umgehen und direkt auf die Turbinenschaufeln treffen. Eine weitere Vorrichtung mit diesen Merkmalen ist auch bekannt aus der EP 1 930 509 A1.

Nachteilig bei diesen bekannten Leckageschutz-Anordnungen ist ihr aufwändiger Aufbau und die dadurch erforderliche teure Ausgestaltung. Es werden diverse Drucksensoren, Rückflussverhinderer und zusätzliche Strömungsmesser benötigt. Zudem ist im Betrieb dieser Anordnungen bei zeitweiliger Absperrung die Wasserversorgung vollständig unterbrochen.

### Aufgabe der Erfindung

Demgegenüber ist es Aufgabe der vorliegenden Erfindung, eine Vorrichtung der eingangs definierten Art zum automatischen Verschließen einer Schlauch- und/oder Rohrleitung für den Transport flüssiger oder gasförmiger Medien auf technisch möglichst einfache und kostengünstige Weise so zu modifizieren, dass damit zuverlässig kleine und große Leckagen erkannt und dadurch größere Wasserschäden wirksam verhindert werden können.

### Kurze Beschreibung der Erfindung

Diese Aufgabe wird erfindungsgemäß gelöst durch eine Verschlussvorrichtung mit den eingangs definierten Merkmalen, die dadurch gekennzeichnet ist, dass der Anlaufwert des Turbinen- oder Flügelrad-Durchflussmessers durch Erhöhung der Anströmgeschwindigkeit der Turbine bzw. des Flügelrads verbessert wird, indem die elektronische Steuervorrichtung und das Verschlussorgan so ausgestaltet sind, dass das Verschlussorgan in Betriebsphasen der Vorrichtung, in denen kein Durchfluss durch den Turbinen- oder Flügelrad-Durchflussmesser in der elektronischen Steuervorrichtung registriert wird, zur Prüfung einer Kleinleckage lediglich partiell, nie vollständig geschlossen wird.

Bei Registrierung eines Durchflusses durch den Durchflussmesser aufgrund entsprechender Signale aus der elektronischen Steuervorrichtung bei Überschreiten des vorgegebenen Grenzwertes wird beim Stand der Technik das Verschlussorgan immer vollständig geschlossen und bei dessen Unterschreiten immer vollständig geöffnet.

Mit der erfindungsgemäßen Anordnung hingegen wird durch die lediglich partielle, nie vollständige Schließung des Verschlussorgans zur Prüfung einer Kleinleckage in Betriebsphasen, in denen kein Durchfluss registriert wird, sichergestellt, dass keine unerwünschte Vollsperrung der Anordnung erfolgt, so dass eine Grundversorgung der nachfolgenden Installation mit Fluid erhalten bleibt, aber dennoch der Fluidverlust durch eine etwaige Kleinleckage minimiert wird.

Größere Systeme mit dicken Rohrleitungen erfordern zur Strömungsmessung träge Turbinen- oder Flügelräder, die einen hohen Anlaufwiderstand aufweisen. Die vorliegende Erfindung ermöglicht, dass der Anlaufwert solcher Turbinen- oder Flügelräder verbessert wird durch Erhöhung der Anströmgeschwindigkeit der Turbine bzw. des Flügelrads ohne einen zusätzlichen mechanischen Aufwand (etwa ein separates Steuerelement wie z.B. eine Klappe, Blende, Scheibe) bzw. ohne zusätzlichen Kanal bzw. Bypass mit gegebenenfalls zweitem Durchflussmesser und Rückflussverhinderer im Hauptkanal. Es werden zur Verbesserung des Anlaufwertes des Durchflussmessers lediglich bereits vorhandene Bauteile (Verschlussorgan mit Stellmotor und elektronische Steuervorrichtung) der Wasserschadenschutzvorrichtung verwendet. Die Konstruktion ist so besonders einfach und kostengünstig. Durch den besseren Anlaufwert des Turbinen- oder Flügelrad-Durchflussmessers sind auch kleine Leckagen (Schleichmengen) erkennbar.

Im Gegensatz zu einer vollständigen Schließung des Verschlussorgans zur Erkennung einer kleinen Leckage mittels Druckabfall (wie beim Stand der Technik) ist eine Grundversorgung der nachfolgenden Installation mit dem Medium immer sichergestellt.

Zur Prüfung, ob eine Kleinleckage vorliegt, kann das Verschlussorgan immer partiell geschlossen sein, wenn kein Durchfluss registriert wird. Ebenso kann das Verschlussorgan lediglich zeitweise, etwa nach bestimmten Intervallen für eine definierte Zeit partiell geschlossenen werden. Beispielsweise kann das Verschlussorgan alle 24 Stunden für 15 Sekunden partiell geschlossen werden. In der Regel reicht eine tägliche kurze Prüfung aus, da der Wasserverlust bzw. der Wasserschaden bei einer Kleinleckage erst relevant werden, wenn Wasser über eine längere Zeit unkontrolliert austritt. Voraussetzung zum Start der Prüfung auf eine Kleinleckage kann beispielsweise sein, dass im davorliegenden Zeitraum mindestens 1 Stunde kein Durchfluss erkannt wurde. Gegebenenfalls verschiebt sich der Start der Prüfung entsprechend. Weiterhin ist es möglich, dass der Start der Prüfung auf eine Kleinleckage manuell ausgelöst wird, etwa über eine Eingabetastatur an der Vorrichtung oder über ein Handy

Erfasst der Durchflussmesser bei partiell geschlossenem Verschlussorgan einen Durchfluss bzw. eine bestimmte Anzahl an Impulsen, so wird von einer Kleinleckage ausgegangen, wenn nach anschließender vollständiger Öffnung des Verschlussorgans eine bestimmte Zeit lang, z.B. eine Minute, kein Durchfluss gemessen wird bzw. keine weiteren Impulse erfasst werden. Größere Leckagen werden erfasst, wenn (bei vollständig geöffnetem Verschlussorgan) der Volumenstrom und/oder die zusammenhängende Entnahmezeit und/oder das entnommene Gesamtvolumen einen Grenzwert überschreitet.

Der Durchflussmesser und das Verschlussorgan müssen übrigens nicht notwendig in einem gemeinsamen Gehäuse angeordnet sein. Beispielsweise kann der Durchflussmesser in einer zentralen Wasserenthärtungsanlage positioniert sein, während das Verschlussorgan separat vor der Wasserenthärtungsanlage in einer zentralen Zuleitung eingebaut ist.

### Bevorzugte Ausführungsformen und Varianten der Erfindung

Eine Klasse von besonders bevorzugten Ausführungsformen der erfindungsgemäßen Verschlussvorrichtung zeichnet sich dadurch aus, dass die elektronische Steuervorrichtung und das Verschlussorgan so ausgestaltet sind, dass das Verschlussorgan in Betriebsphasen, in denen vom Turbinen- oder Flügelrad-Durchflussmesser kein Durchfluss in der elektronischen Steuervorrichtung registriert wird, nur zeitweise partiell schließt.

In bevorzugten Weiterbildungen dieser Klasse von Ausführungsformen können die elektronische Steuervorrichtung und das Verschlussorgan so ausgestaltet sein, dass in Betriebsphasen, in denen vom Turbinen- oder Flügelrad-Durchflussmesser kein Durchfluss in der elektronischen Steuervorrichtung registriert wird, das Verschlussorgan in vorbestimmten Zeitintervallen und/oder für vordefinierte Partialverschlusszeiten, vorzugsweise alle 5h bis 50h für 5sec bis 1min, insbesondere alle 24h für 15sec, partiell schließt.

Bevorzugt sind auch Ausführungsformen der Erfindung, bei welchen die elektronische Steuervorrichtung und das Verschlussorgan so ausgestaltet sind, dass eine automatische Prüfung auf eine Kleinleckage erst dann ausgelöst wird, wenn mindestens 1h lang vor Beginn der Prüfung kein Durchfluss durch den Turbinen- oder Flügelrad-Durchflussmesser in der elektronischen Steuervorrichtung registriert worden ist.

Eine weitere Klasse von vorteilhaften Ausführungsformen ist dadurch gekennzeichnet, dass die elektronische Steuervorrichtung und das Verschlussorgan so ausgestaltet sind, dass eine Prüfung auf eine Kleinleckage manuell ausgelöst werden kann.

Vorteilhafte Weiterbildungen dieser Klasse von Ausführungsformen zeichnen sich dadurch aus, dass eine Prüfung auf eine Kleinleckage über eine Eingabetastatur an der Vorrichtung oder über ein Mobiltelefon ausgelöst werden kann.

Bei einer weiteren Klasse von Ausführungsformen umfasst das Verschlussorgan einen Kugelhahn mit einer Kugel. Damit ist die gewünschte Durchflussmenge einfach und stufenlos verstellbar.

Vorteilhafte Weiterbildungen dieser Klasse von Ausführungsformen zeichnen sich dadurch aus, dass in der elektronischen Steuervorrichtung eine Kennlinie hinterlegt ist, die den Anlaufwert des Turbinen- oder Flügelrad-Durchflussmessers in Abhängigkeit von der Stellung der Kugel im Kugelhahn wiedergibt. Die Kennlinie ist anlagencharakteristisch abhängig vom Kugelhahn, dem Turbinen- oder Flügelrad-Durchflussmesser und deren Position zueinander. Sie zeigt den Anlaufwert des Durchflussmessers in Abhängigkeit von der Kugelstellung.

Alternativ oder ergänzend kann bei anderen Weiterbildungen die Kugel einen Öffnungswinkel zwischen 1° und 30°, insbesondere zwischen 10° und 20°, aufweisen. In der Praxis zeigen Messungen hier einen besonders niedrigen Anlaufwert, d.h. kleinste Leckagen können erkannt werden.

Weitere vorteilhafte Ausführungsformen der Erfindung sind dadurch gekennzeichnet, dass in einer mit der elektronischen Steuervorrichtung verbundenen Speichereinheit eine Verbrauchshistorie der Vorrichtung abgespeichert ist, und dass die Betriebsphasen, in denen das Verschlussorgan partiell geschlossen bleibt, anhand dieser Verbrauchshistorie festgelegt werden.

In Zeiten, in denen erfahrungsgemäß kein oder nur sehr wenig Wasser gezapft wird, beispielsweise nachts oder in Urlaubszeiten, kann der maximal mögliche Durchfluss gedrosselt werden, um den Anlaufwert des Turbinen- oder Flügelrad-Durchflussmesser zu erniedrigen und die Empfindlichkeit zur Erkennung einer Leckage, insbesondere bei Schleichmengen, zu verbessern.

In Zeiten, in denen üblicherweise (auch in größeren Mengen) Wasser gezapft wird, beispielsweise morgens und abends, bleibt das Verschlussorgan vollständig geöffnet. In diesem Fall reicht der "reguläre" Anlaufwert des Verschlussorgans aus.

Alternativ kann eine Phase mit partiell geschlossenem Verschlussorgan auch manuell eingegeben werden, beispielsweise bei Verdacht einer kleinen Leckage durch eine Undichtigkeit.

Bevorzugt ist auch eine Klasse von Ausführungsformen der Erfindung, bei welchen die elektronische Steuervorrichtung und das Verschlussorgan so ausgestaltet sind, dass eine Kleinleckage dann detektiert wird, wenn bei partieller Schließung des Verschlussorgans der Turbinen- oder Flügelrad-Durchflussmesser einen Durchfluss registriert, der bei vollständiger Öffnung des Verschlussorgans nicht mehr erfasst wird.

Eine Kleinleckage liegt vor, wenn nach vollständiger Öffnung des Verschlussorgans eine bestimmte Zeit lang, z.B. eine Minute, kein Durchfluss gemessen wird bzw. keine weiteren Impulse erfasst werden. Es fließt lediglich sehr wenig Medium. Bei vollständiger Öffnung des Verschlussorgans verringert sich die geringe Anströmgeschwindigkeit der Turbine so weit, bis deren Anlaufwiderstand schließlich nicht mehr überwunden werden kann. Solche geringen Durchflüsse sind typisch bei kleinen Leckagen, etwa eine defekte Dichtung, ein tropfender Wasserhahn oder ähnliches.

Wird auch nach vollständiger Öffnung des Verschlussorgans ein Durchfluss erfasst, so wird zunächst davon ausgegangen, dass eine reguläre Wasserentnahme erfolgt, und das Verschlussorgan bleibt geöffnet. Um (größere) Leckagen zu vermeiden wird in diesem Normalbetrieb das Verschlussorgan geschlossen, wenn der Volumenstrom und/oder die zusammenhängende Entnahmezeit und/oder das entnommene Gesamtvolumen einen Grenzwert überschreitet.

Bei Weiterbildungen dieser Klasse von Ausführungsformen kann es günstig sein, wenn die elektronische Steuervorrichtung und das Verschlussorgan so ausgestaltet sind, dass bei Detektion einer Kleinleckage eine Alarmmeldung erfolgt und/oder das Verschlussorgan vollständig geschlossen wird.

Liegt eine Kleinleckage vor, kann eine Alarmmeldung und/oder ein Schließen des Verschlussorgans erfolgen. Eine Alarmmeldung (ohne Schließen des Verschlussorgans) kann bei Kleinleckagen ausreichen, da der Wasserverlust bzw. der Wasserschaden insbesondere über kürzere Zeiträume überschaubar ist und die Wasserversorgung der nachfolgenden Installation sichergestellt ist.

In der Praxis bewähren sich auch Ausführungsformen der Erfindung, bei welchen die elektronische Steuervorrichtung und das Verschlussorgan so ausgestaltet sind, dass das Verschlussorgan zeitweise vollständig geschlossen und anschließend partiell oder vollständig wieder geöffnet wird, wobei geprüft wird, ob unmittelbar nach Wiederöffnen des Verschlussorgans der Turbinen- oder Flügelrad-Durchflussmesser kurzzeitig Impulse an die elektronische Steuervorrichtung liefert, und das Verschlussorgan absperrt, wenn die Anzahl der Impulse einen vorgegebenen Grenzwert überschreitet.

Bei einer kleinen Leckage fällt der Druck hinter dem Verschlussorgan langsam ab. Unmittelbar nach Wiederöffnen des Verschlussorgans fließt kurzzeitig bis zum Druckausgleich eine kleine Menge Wasser und der Turbinen- oder Flügelrad-Durchflussmesser liefert während dieser Phase Impulse an die elektronische Steuervorrichtung.

Die Anzahl der Impulse hängt von der Schließdauer und von der Größe der Leckage ab.

Es wird in Phasen, in denen mit keiner Wasserentnahme zu rechnen ist (Verbrauchsprofil), das Verschlussorgan zeitweise vollständig geschlossen. Das Zeitintervall wird kurzgehalten und in regelmäßigen Abständen wiederholt, um im Bedarfsfall die Versorgung der nachfolgenden Installation mit dem Medium zu gewährleisten. Da der Durchflussmesser Impulse nach einem Druckabfall registriert, ist kein separater Drucksensor notwendig.

Das Verschlussorgan sperrt nicht ab, wenn nach Wiederöffnen des Verschlussorgans der Turbinen- oder Flügelrad-Durchflussmesser dauerhaft Impulse an die elektronische Steuervorrichtung liefert. In diesem Fall liegt keine (kleine) Leckage vor und es ist zunächst von einer regulären Wasserentnahme auszugehen. Anschließend werden die in der elektronischen Steuervorrichtung hinterlegten Schließkriterien überprüft (beispielsweise ein maximaler Volumenstrom oder eine maximale zusammenhängende Entnahmezeit).

In den Rahmen der vorliegenden Erfindung fällt auch eine Wasserbehandlungsanlage, insbesondere eine Hauswasserinstallation, mit einer Vorrichtung zum automatischen Verschließen einer Schlauch- oder Rohrleitung der oben beschriebenen erfindungsgemäßen Art.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1a: eine schematische Seitenansicht einer erfindungsgemäßen Vorrichtung zum Verschließen einer Schlauch- und/oder Rohrleitung für den Transport flüssiger oder gasförmiger Medien, insbesondere Wasser, für die Erkennung von Kleinleckagen und das Abwenden von Wasserschäden;
- Fig. 1b: eine schematische Draufsicht auf Kugel und Turbine aus der Vorrichtung nach Fig. 1a;
- Fig. 2: ein Ablaufdiagramm für den Betrieb einer erfindungsgemäßen Verschlussvorrichtung mit partiell geschlossenem Verschlussorgan;
- Fig. 3: ein Ablaufdiagramm für den Betrieb einer erfindungsgemäßen Verschlussvorrichtung mit vollständig geschlossenem Verschlussorgan;
- Fig. 4: eine Diagramm-Darstellung des Anlaufwertes eines Durchflussmessers in Abhängigkeit vom Öffnungswinkel der Kugel eines Kugelhahns;
- Fig. 5a: eine Diagramm-Darstellung des Druckabfalls hinter einem vollständig geschlossenen Verschlussorgan während einer Leckage in Abhängigkeit von der Zeit; und
- Fig. 5b: eine Diagramm-Darstellung der Anzahl der vom Durchflussmesser registrierten Impulse nach Wiederöffnen des Verschlussorgans in Abhängigkeit von der Schließdauer vorab.

Die vorliegende Erfindung befasst sich allgemein mit dem Leckageschutz in Systemen von Schlauch- und/oder Rohrleitungen für den Transport flüssiger oder gasförmiger Medien, insbesondere Fluiden wie Wasser. Besondere Anwendung findet die Erfindung auf dem Gebiet der Hauswasserinstallationen. Sie betrifft eine neuartige Betriebsweise sowie eine entsprechende Ausgestaltung einer solchen Wasserinstallation mit dem Ziel einer Verhinderung oder wenigstens Minimierung von Wasserschäden durch Leckage-Ereignisse.

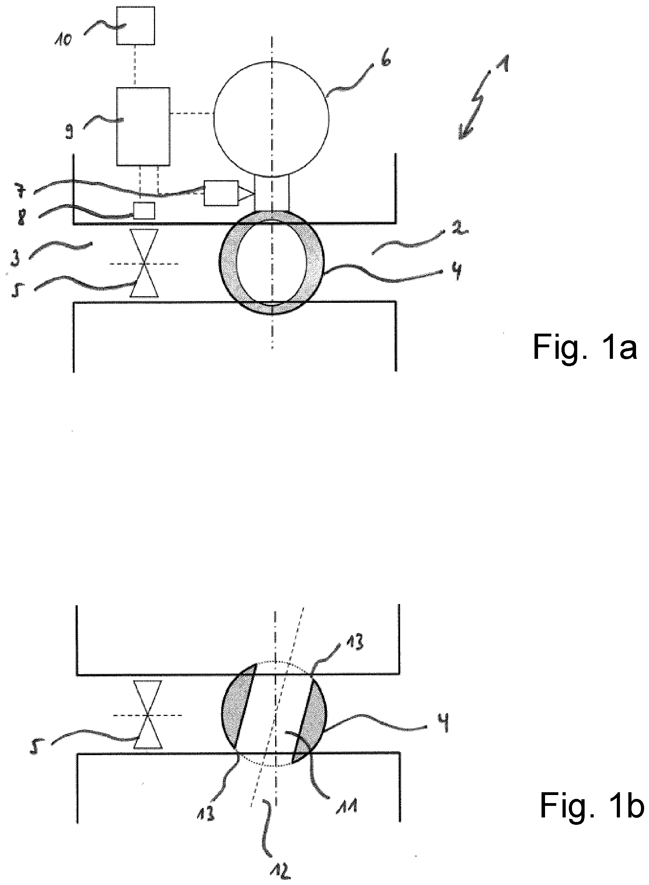

Ausgangspunkt ist eine **Verschlussvorrichtung 1** zum automatischen Verschließen einer Schlauch- und/oder Rohrleitung (in den **Figuren 1a und 1b** lediglich reduziert dargestellt durch einen **Fluid-Zulauf 2** und einen **Fluid-Ablauf 3)** für den Transport flüssiger oder gasförmiger Medien, insbesondere Wasser, umfassend
- ein **Verschlussorgan 4,**
- einen in Strömungsrichtung unmittelbar hinter dem Verschlussorgan 4 angeordneten Turbinen- oder Flügelrad-Durchflussmesser (in den Figuren 1a und 1b lediglich reduziert dargestellt durch eine schematisch angedeutete **Turbine 5),**
- eine **elektronische Steuervorrichtung 9,** die im Betrieb Signale vom Turbinen- oder Flügelrad-Durchflussmesser 5 erhält,
- einen **Stellmotor 6,** durch den das Verschlussorgan 4 aufgrund von

Signalen der elektronischen Steuervorrichtung 9 bei Über- bzw. Unterschreiten eines vorgebbaren Grenzwertes geschlossen bzw. geöffnet werden kann.

Die erfindungsgemäße Anordnung zeichnet sich gegenüber herkömmlichen Vorrichtungen nach dem Stand der Technik dadurch aus, dass die elektronische Steuervorrichtung 9 und das Verschlussorgan 4 so ausgestaltet sind, dass das Verschlussorgan 4 in Betriebsphasen der Vorrichtung 1, in denen kein Durchfluss durch den Turbinen- oder Flügelrad-Durchflussmesser 5 in der elektronischen Steuervorrichtung 9 registriert wird, zur Prüfung einer Kleinleckage lediglich partiell, nie vollständig geschlossen wird.

In Fig. 1a sind zudem ein **Nockenschalter 7,** ein **Hallsensor 8** sowie eine **Netzversorgung 10** für die elektronische Steuervorrichtung 9 schematisch angedeutet.

Fig. 1b zeigt eine schematische Draufsicht auf die Kugel 4 und die Turbine 5 aus der Vorrichtung 1 nach Fig. 1a. Die Kugel 4 weist eine **Durchgangsbohrung 11** sowie einen **Öffnungswinkel 12** (hier: 15°) auf. Damit wird ein **Durchgangsspalt 13** zwischen Fluid-Zulauf 2 und Fluid-Ablauf 3 eröffnet.

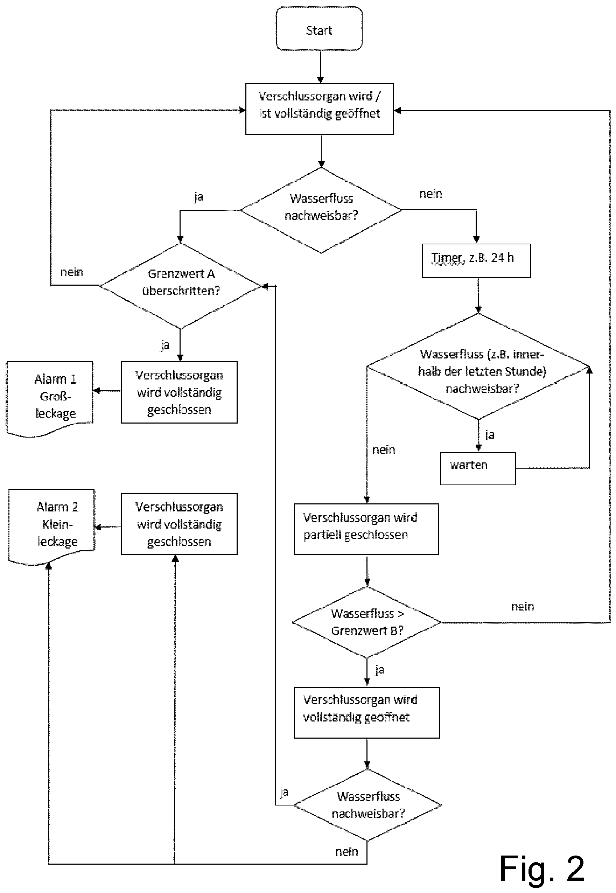

**Fig. 2** stellt ein Ablaufdiagramm für den Betrieb einer erfindungsgemäßen Verschlussvorrichtung 1 mit partiell geschlossenem Verschlussorgan 4 dar.

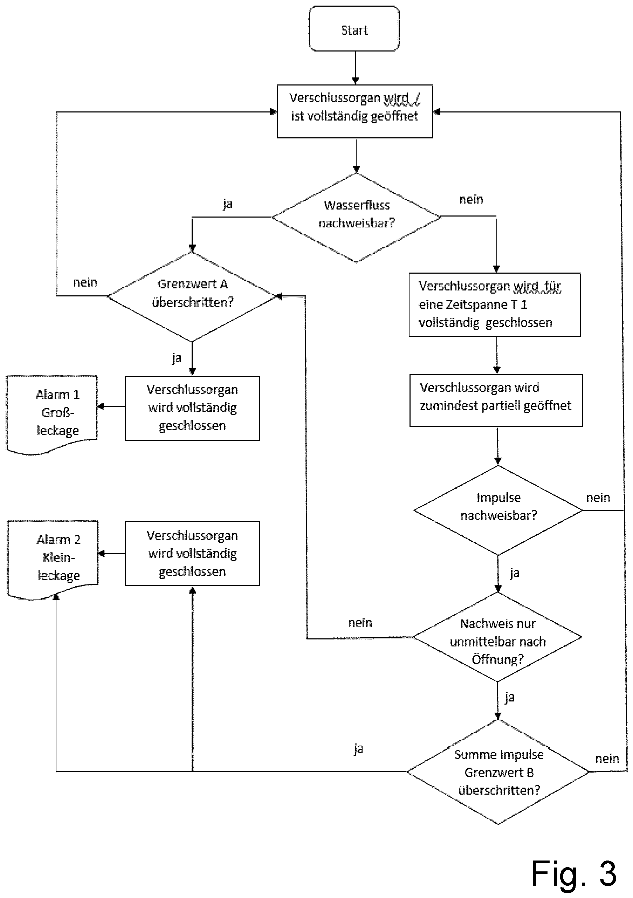

**Fig. 3** ist ein Ablaufdiagramm für den Betrieb einer erfindungsgemäßen Verschlussvorrichtung 1 mit vollständig geschlossenem Verschlussorgan 4.

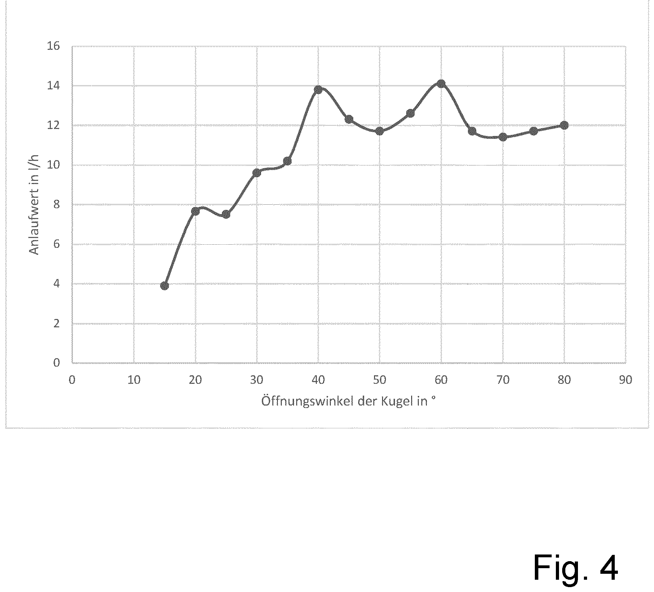

**Fig. 4** zeigt eine Diagramm-Darstellung des Anlaufwertes eines Durchflussmessers in Abhängigkeit vom Öffnungswinkel der Kugel eines Kugelhahns.

Aus dem Diagramm von Fig. 4 geht hervor, dass bei einem Öffnungswinkel der Kugel von 90° (Kugelhahn vollständig geöffnet) der Anlaufwert bei ca. 12 l/h liegt. Das heißt, geringere Durchflüsse, etwa bei kleineren Undichtigkeiten im System, werden nicht erfasst. Bei Reduzierung des Öffnungswinkels der Kugel verkleinert sich der Spalt, durch den das Medium fließt. Dadurch erhöht sich die Anströmgeschwindigkeit der unmittelbar nachfolgenden Turbine. Der Anlaufwert verringert sich entsprechend. Bei einem Öffnungswinkel von ca. 15° beträgt der Anlaufwert nur noch ca. 4 l/h. Die Wasserschadenschutzvorrichtung erkennt dann auch kleinere Leckagen. Bei weiterer Verkleinerung des Öffnungswinkels der Kugel fließt schließlich so wenig Wasser durch die Öffnung zur Turbine, dass deren Anlaufwiderstand nicht mehr überwunden werden kann.

Der Anlaufwert und damit die Empfindlichkeit des Durchflussmessers lässt sich über den Öffnungswinkel der Kugel variieren und so an die jeweilige Situation anpassen. Ist beispielsweise eine mittlere Empfindlichkeit ausreichend, etwa bei einem Anlaufwert von 8 l/h, so kann die Kugel bis zu einem Öffnungswinkel von ca. 25° geöffnet werden. Dadurch kann mehr Medium vom Verbraucher angefordert werden als bei einem empfindlichkeitsoptimierten Öffnungswinkel von ca. 15°.

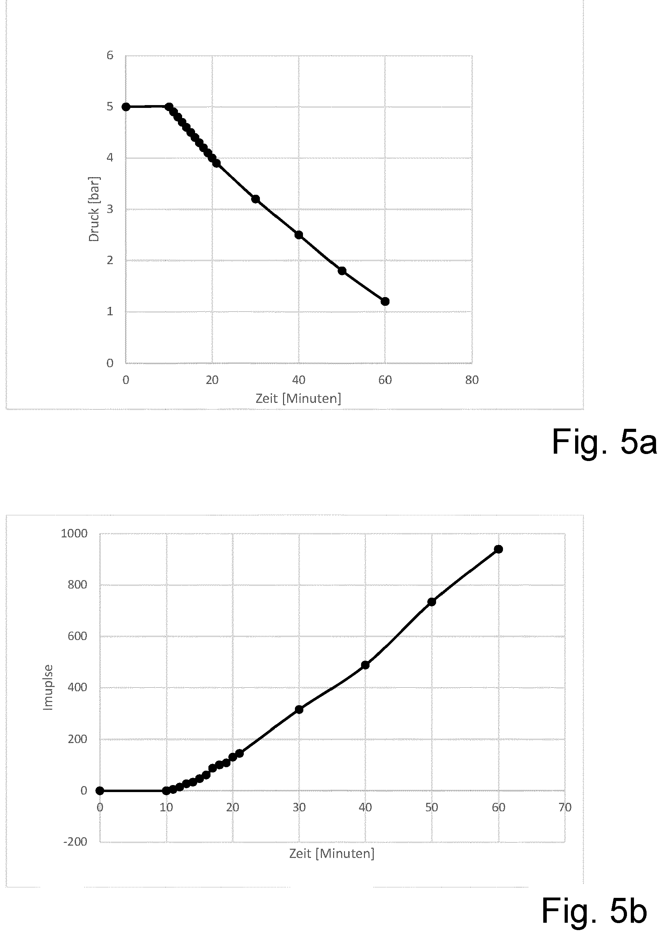

Die Diagramm-Darstellung von **Fig. 5a** zeigt den Druckabfall hinter einem vollständig geschlossenen Verschlussorgan während einer Leckage in Abhängigkeit von der Zeit.

Die Geschwindigkeit des Druckabfalls hängt vom Vordruck und von der Größe der Undichtigkeit ab. Im aufgeführten Beispiel beträgt der Vordruck 5 bar und es liegt eine Undichtigkeit von ca. 1,5 Liter/Stunde vor. Durch die Leckage fällt der Druck hinter dem geschlossenen Verschlussorgan innerhalb von 30 Minuten auf etwa 3,2 bar ab. Nach einer Stunde schließlich ist der Druck auf etwa 1,2bar gesunken.

**Fig. 5b** schließlich zeigt eine Diagramm-Darstellung der Anzahl der vom Durchflussmesser registrierten Impulse nach Wiederöffnen des Verschlussorgans in Abhängigkeit von der Schließdauer vorab.

Bis zu einer Schließdauer von 10 Minuten werden keine Impulse registriert. Bei steigender Schließdauer werden unmittelbar nach Wiederöffnen des Verschlussorgans Impulse vom Durchflussmesser registriert, was auf eine (kleine) Leckage hindeutet. Die Impulszahl liegt bei einer Schließdauer von 30 Minuten bei ca. 300, nach einer Schließdauer von einer Stunde werden im aufgeführten Beispiel über 900 Impulse registriert.

### Bezugszeichenliste

- 1: Verschlussvorrichtung
- 2: Fluid-Zulauf einer Schlauch- und/oder Rohrleitung
- 3: Fluid-Ablauf einer Schlauch- und/oder Rohrleitung
- 4: Verschlussorgan (hier: Kugel eines Kugelhahns)
- 5: Turbinen- oder Flügelrad-Durchflussmesser (hier: Turbine)
- 6: Stellmotor für das Verschlussorgan
- 7: Nockenschalter
- 8: Hallsensor
- 9: elektronische Steuervorrichtung
- 10: Netzversorgung der Steuervorrichtung
- 11: Durchgangsbohrung durch die Kugel
- 12: Öffnungswinkel der Kugel (hier: 15°)
- 13: Durchgangsspalt zwischen Fluid-Zulauf und Fluid-Ablauf

### Referenzliste:

Für die Beurteilung der Patentfähigkeit in Betracht gezogene Druckschriften:
[1] WO 2014/029699 A1
[2a-c] DE 10 2011 055 642 A1, WO 2006/069930 A2, DE 10 2012 211 132 A1
[3a,b] DE 196 08 527 C2, EP 0 794 381 B1
[4a,b] DE 195 08 114 C2, EP 0 731 313 B1
[5a-c] DE 44 03 178 C1, DE 385507, DE 83598

## Patentansprüche

1. Vorrichtung (1) zum automatischen Verschließen einer Schlauch- und/oder Rohrleitung (2, 3) für den Transport flüssiger oder gasförmiger Medien, insbesondere Wasser, umfassend
- ein Verschlussorgan (4),
- einen in Strömungsrichtung unmittelbar hinter dem Verschlussorgan (4) angeordneten Turbinen- oder Flügelrad-Durchflussmesser (5),
- eine elektronische Steuervorrichtung (9), die im Betrieb Signale vom Turbinen- oder Flügelrad-Durchflussmesser (5) erhält,
- einen Stellmotor (6), durch den das Verschlussorgan (4) aufgrund von Signalen der elektronischen Steuervorrichtung (9) bei Über- bzw. Unterschreiten eines vorgebbaren Grenzwertes geschlossen bzw. geöffnet werden kann,
**dadurch gekennzeichnet,**
**dass** die elektronische Steuervorrichtung (9) und das Verschlussorgan (4) so ausgestaltet sind, dass der Anlaufwert des Turbinen- oder Flügelrad-Durchflussmessers (5) durch Erhöhung der Anströmgeschwindigkeit der Turbine bzw. des Flügelrads verbessert wird, indem das Verschlussorgan (4) in Betriebsphasen der Vorrichtung (1), in denen kein Durchfluss durch den Turbinen- oder Flügelrad-Durchflussmesser (5) in der elektronischen Steuervorrichtung (9) registriert wird, zur Prüfung einer Kleinleckage zumindest zeitweise lediglich partiell, also nicht vollständig geschlossen wird.

2. Vorrichtung nach Anspruch 1, **dadurch gekennzeichnet, dass** die elektronische Steuervorrichtung (9) und das Verschlussorgan (4) so ausgestaltet sind, dass in Betriebsphasen, in denen vom Turbinen- oder Flügelrad-Durchflussmesser (5) kein Durchfluss in der elektronischen Steuervorrichtung (9) registriert wird, das Verschlussorgan (4) in vorbestimmten Zeitintervallen und/oder für vordefinierte Partialverschlusszeiten, vorzugsweise alle 5h bis 50h für 5sec bis 1min, insbesondere alle 24h für 15sec, partiell schließt.

3. Vorrichtung nach einem der vorhergehenden Ansprüche, **dadurch gekennzeichnet, dass** die elektronische Steuervorrichtung (9) und das Verschlussorgan (4) so ausgestaltet sind, dass eine automatische Prüfung auf eine Kleinleckage erst dann ausgelöst wird, wenn mindestens 1h lang vor Beginn der Prüfung kein Durchfluss durch den Turbinen- oder Flügelrad-Durchflussmesser (5) in der elektronischen Steuervorrichtung (9) registriert worden ist.

4. Vorrichtung nach einem der vorhergehenden Ansprüche, **dadurch gekennzeichnet, dass** die elektronische Steuervorrichtung (9) und das Verschlussorgan (4) so ausgestaltet sind, dass eine Prüfung auf eine Kleinleckage manuell ausgelöst werden kann.

5. Vorrichtung nach Anspruch 4, **dadurch gekennzeichnet, dass** eine Prüfung auf eine Kleinleckage über eine Eingabetastatur an der Vorrichtung (1) oder über ein Mobiltelefon ausgelöst werden kann.

6. Vorrichtung nach einem der vorhergehenden Ansprüche, **dadurch gekennzeichnet, dass** das Verschlussorgan (4) einen Kugelhahn mit einer Kugel umfasst.

7. Vorrichtung nach Anspruch 6, **dadurch gekennzeichnet, dass** in der elektronischen Steuervorrichtung (9) eine Kennlinie hinterlegt ist, die den Anlaufwert des Turbinen- oder Flügelrad-Durchflussmessers (5) in Abhängigkeit von der Stellung der Kugel im Kugelhahn wiedergibt.

8. Vorrichtung nach Anspruch 6 oder 7, **dadurch gekennzeichnet, dass** die Kugel einen Öffnungswinkel (12) zwischen 1° und 30°, insbesondere zwischen 10° und 20°, aufweist.

9. Vorrichtung nach einem der vorhergehenden Ansprüche, **dadurch gekennzeichnet, dass** in einer mit der elektronischen Steuervorrichtung (9) verbundenen Speichereinheit eine Verbrauchshistorie der Vorrichtung (1) abgespeichert ist, und dass die Betriebsphasen, in denen das Verschlussorgan (4) partiell geschlossen bleibt, anhand dieser Verbrauchshistorie festgelegt werden.

10. Vorrichtung nach einem der vorhergehenden Ansprüche, **dadurch gekennzeichnet, dass** die elektronische Steuervorrichtung (9) und das Verschlussorgan (4) so ausgestaltet sind, dass eine Kleinleckage dann detektiert wird, wenn bei partieller Schließung des Verschlussorgans (4) der Turbinen- oder Flügelrad-Durchflussmesser (5) einen Durchfluss registriert, der bei vollständiger Öffnung des Verschlussorgans (4) nicht mehr erfasst wird.

11. Vorrichtung nach Anspruch 10, **dadurch gekennzeichnet, dass** die elektronische Steuervorrichtung (9) und das Verschlussorgan (4) so ausgestaltet sind, dass bei Detektion einer Kleinleckage eine Alarmmeldung erfolgt und/oder das Verschlussorgan (4) vollständig geschlossen wird.

12. Vorrichtung nach einem der vorhergehenden Ansprüche, **dadurch gekennzeichnet, dass** die elektronische Steuervorrichtung (9) und das Verschlussorgan (4) so ausgestaltet sind, dass das Verschlussorgan (4) zeitweise vollständig geschlossen und anschließend partiell oder vollständig wieder geöffnet wird, wobei geprüft wird, ob unmittelbar nach Wiederöffnen des Verschlussorgans (4) der Turbinen- oder Flügelrad-Durchflussmesser (5) kurzzeitig Impulse an die elektronische Steuervorrichtung (9) liefert, und das Verschlussorgan (4) absperrt, wenn die Anzahl der Impulse einen vorgegebenen Grenzwert überschreitet.

13. Wasserbehandlungsanlage, insbesondere Hauswasserinstallation, mit einer Vorrichtung (1) zum automatischen Verschließen einer Schlauch- oder Rohrleitung (2, 3) nach einem der vorhergehenden Ansprüche.

14. Verfahren zum Betrieb einer Vorrichtung (1) zum automatischen Verschließen einer Schlauch- und/oder Rohrleitung (2, 3) für den Transport flüssiger oder gasförmiger Medien nach einem der vorhergehenden Ansprüche, **dadurch gekennzeichnet, dass** der Anlaufwert des Turbinen- oder Flügelrad-Durchflussmessers (5) durch Erhöhung der Anströmgeschwindigkeit der Turbine bzw. des Flügelrads verbessert wird, indem die elektronische Steuervorrichtung (9) das Verschlussorgan (4) in Betriebsphasen der Vorrichtung (1), in denen kein Durchfluss durch den Turbinen- oder Flügelrad-Durchflussmesser (5) in der elektronischen Steuervorrichtung (9) registriert wird, derart ansteuert, dass das Verschlussorgan (4) zur Prüfung einer Kleinleckage zumindest zeitweise lediglich partiell, also nicht vollständig geschlossen wird, so dass eine Grundversorgung der nachfolgenden Installation mit Fluid erhalten bleibt, aber dennoch der Fluidverlust durch eine etwaige Kleinleckage minimiert wird.

15. Verfahren nach Anspruch 14, **dadurch gekennzeichnet, dass** die elektronische Steuervorrichtung (9) in Betriebsphasen, in denen vom Turbinen- oder Flügelrad-Durchflussmesser (5) im davorliegenden Zeitraum mindestens 1 Stunde kein Durchfluss registriert wird, das Verschlussorgan (4) in vorbestimmten Zeitintervallen und/oder für vordefinierte Partialverschlusszeiten, vorzugsweise alle 5h bis 50h für 5sec bis 1min, insbesondere alle 24h für 15sec, derart ansteuert, dass das Verschlussorgan (4) partiell schließt.

## Claims

1. Device (1) for automatically closing a hose and/or pipe line (2, 3) for transporting liquid or gaseous media, in particular water, comprising
- a closure member (4),
- a turbine or impeller flow meter (5) positioned immediately downstream of the closure member (4) in the flow direction,
- an electronic control device (9) that receives signals from the turbine or impeller flow meter (5) during operation,
- a servomotor (6), by means of which the closure member (4) can be closed or opened on the basis of signals from the electronic control device (9) when a predeterminable limit value is exceeded or fallen below,
**characterised in that**
the electronic control device (9) and the closure member (4) are designed in such a way that the transition value of the turbine or impeller flow meter (5) is improved by increasing the tip velocity of the turbine or impeller, respectively, by at least temporarily closing only partially, i.e. not completely, the closure element (4) in order to check for a small leakage in operating phases of the device (1) in which no flow through the turbine or impeller flow meter (5) is registered in the electronic control device (9).

2. Device according to claim 1, **characterised in that** the electronic control device (9) and the closure member (4) are designed in such a way that during operating phases in which no flow is registered in the electronic control device (9) by the turbine or impeller flow meter (5), the closure member (4) closes partially at predetermined time intervals and/or for predefined partial closure times, preferably every 5h to 50h for 5sec to 1min, in particular every 24h for 15sec.

3. Device according to any one of the preceding claims, **characterised in that** the electronic control device (9) and the closure member (4) are designed in such a way that an automatic check for a small leakage is triggered only if no flow through the turbine or impeller flow meter (5) has been registered in the electronic control device (9) for at least 1h before the start of the check.

4. Device according to any one of the preceding claims, **characterised in that** the electronic control device (9) and the closure element (4) are designed in such a way that a check for a small leakage can be triggered manually.

5. Device according to claim 4, **characterized in that** a check for a small leakage can be triggered via an input keypad on the device (1) or via a mobile telephone.

6. Device according to any one of the preceding claims, **characterised in that** the closure member (4) comprises a ball valve with a ball.

7. Device according to claim 6, **characterised in that** a characteristic curve is deposited in the electronic control device (9), which reproduces the transition value of the turbine or impeller flow meter (5) as a function of the position of the ball in the ball valve.

8. Device according to claim 6 or 7, **characterised in that** the ball has an opening angle (12) between 1° and 30°, in particular between 10° and 20°.

9. Device according to any one of the preceding claims, **characterised in that** a consumption history of the device (1) is stored in a memory unit connected to the electronic control device (9), and **in that** the operating phases in which the closure member (4) remains partially closed are determined on the basis of this consumption history.

10. Device according to any one of the preceding claims, **characterised in that** the electronic control device (9) and the closure member (4) are designed in such a way that a small leakage is detected if, when the closure member (4) is partially closed, the turbine or impeller flow meter (5) registers a flow that is no longer detected when the closure member (4) is fully open.

11. Device according to claim 10, **characterized in that** the electronic control device (9) and the closure member (4) are designed in such a way that, when a small leakage is detected, an alarm message is issued and/or the closure member (4) is fully closed.

12. Device according to any one of the preceding claims, **characterised in that** the electronic control device (9) and the closure member (4) are designed in such a way that the closure member (4) is temporarily completely closed and then partially or completely opened again, whilst it is being checked whether immediately after reopening of the closure member (4), the turbine or impeller flow meter (5) briefly supplies pulses to the electronic control device (9) and shuts off the closure member (4) if the number of pulses exceeds a predetermined limit value.

13. Water treatment installation, in particular domestic water installation, with a device (1) for automatically closing a hose or pipe line (2, 3) according to any one of the preceding claims.

14. Method for operating a device (1) for automatically closing a hose and/or pipe line (2, 3) for transporting liquid or gaseous media according to any one of the preceding claims, **characterised in that** the transition value of the turbine or impeller flow meter (5) is improved by increasing the tip velocity of the turbine or impeller, respectively, of the turbine or impeller, by the electronic control device (9) controlling the closure element (4) in operating phases of the device (1), in which no flow through the turbine or impeller flow meter (5) is registered in the electronic control device (9), in such a way that the closure element (4) is at least temporarily closed only partially, i.e. not completely, in order to check for a small leakage, so that a basic supply of fluid to the subsequent installation is maintained, but fluid loss due to any small leakage is nevertheless minimised.

15. Method according to claim 14, **characterised in that** in operating phases in which no flow is registered by the turbine or impeller flow meter (5) in the preceding period of at least 1 hour, the electronic control device (9) controls the closure member (4) at predetermined time intervals and/or for predefined partial closure times, preferably every 5h to 50h for 5sec to 1min, in particular every 24h for 15sec, in such a way that the closure member (4) closes partially.

## Revendications

1. Dispositif (1) de fermeture automatique d'un tuyau flexible et/ou d'une canalisation (2, 3) pour le transport de milieux liquides ou gazeux, en particulier de l'eau, comprenant
- un organe de fermeture (4),
- un débitmètre à turbine ou à ailettes (5) disposé directement derrière l'organe de fermeture (4) dans la direction d'écoulement,
- un dispositif de commande électronique (9) qui reçoit, pendant le fonctionnement, des signaux depuis le débitmètre à turbine ou à ailettes (5),
- un moteur de régulation (6) qui permet d'ouvrir et/ou de fermer l'organe de fermeture (4) sur la base de signaux du dispositif de commande électronique (9) en cas de dépassement et/ou sous-dépassement d'une valeur limite prescriptible,
**caractérisé en ce que**
le dispositif de commande électronique (9) et l'organe de fermeture (4) sont conçus de telle sorte que la valeur de débit du débitmètre à turbine ou à ailettes (5) est améliorée par l'augmentation de la vitesse d'impact de la turbine et/ou de l'ailette, dans la mesure où l'organe de fermeture (4) pendant les phases d'exploitation du dispositif (1), au cours desquelles aucun débit n'est enregistré par le débitmètre à turbine ou à ailettes (5) dans le dispositif de commande électronique (9), est fermé au moins ponctuellement partiellement uniquement, c'est-à-dire de manière incomplète.

2. Dispositif selon la revendication 1, **caractérisé en ce que** le dispositif de commande électronique (9) et l'organe de fermeture (4) sont conçus de telle manière que pendant les phases d'exploitation au cours desquelles aucun débit n'est enregistré dans le dispositif de commande électronique (9), l'organe de fermeture (4) se ferme partiellement à des intervalles de temps prédéterminés et/ou à des heures de fermeture partielles prédéfinies, de préférence toutes les 5 h jusqu'à 50 h pendant 5 secondes à 1 minute, en particulier toutes les 24 h pendant 15 secondes.

3. Dispositif selon l'une quelconque des revendications précédentes, **caractérisé en ce que** le dispositif de commande électronique (9) et l'organe de fermeture (4) sont conçus de telle sorte qu'un contrôle automatique de fuite mineure n'est déclenché que si au moins 1h avant le début du contrôle, aucun débit n'est enregistré par le débitmètre à turbine ou à ailettes (5) dans le dispositif de commande électronique (9).

4. Dispositif selon l'une quelconque des revendications précédentes, **caractérisé en ce que** le dispositif de commande électronique (9) et l'organe de fermeture (4) sont conçus de telle sorte qu'un contrôle de fuite mineure peut être déclenché manuellement.

5. Dispositif selon la revendication 4, **caractérisé en ce qu'**un contrôle de fuite mineure peut être déclenché via un clavier d'entrée sur le dispositif (1) ou via un téléphone mobile.

6. Dispositif selon l'une quelconque des revendications précédentes, **caractérisé en ce que** l'organe de fermeture (4) comprend un robinet à boisseau avec une manette.

7. Dispositif selon la revendication 6, **caractérisé en ce qu'**une courbe caractéristique est enregistrée dans le dispositif de commande électronique (9), laquelle courbe caractéristique reproduit la valeur de débit du débitmètre à turbine ou à ailettes (5) en fonction de la position de la manette dans le robinet à boisseau.

8. Dispositif selon les revendications 6 ou 7, **caractérisé en ce que** la manette présente un angle d'ouverture (12) entre 1° et 30°, en particulier entre 10° et 20°.

9. Dispositif selon l'une quelconque des revendications précédentes, **caractérisé en ce qu'**une unité de mémoire raccordée au dispositif de commande électronique (9) stocke un historique de consommation du dispositif (1), et **en ce que** les phases d'exploitation, au cours desquelles l'organe de fermeture (4) reste partiellement fermé, sont déterminées au moyen de cet historique de consommation.

10. Dispositif selon l'une quelconque des revendications précédentes, **caractérisé en ce que** le dispositif de commande électronique (9) et l'organe de fermeture (4) sont conçus de telle sorte qu'une fuite mineure est détectée lorsque le débitmètre à turbine ou à ailettes (5) enregistre un débit avec l'organe de fermeture (4) partiellement fermé, lequel débit n'est plus détecté lorsque l'organe de fermeture (4) est complètement ouvert.

11. Dispositif selon la revendication 10, **caractérisé en ce que** le dispositif de commande électronique (9) et l'organe de fermeture (4) sont conçus de telle manière qu'en cas de détection d'une fuite mineure, un message d'alarme est généré et/ou l'organe de fermeture (4) est complètement fermé.

12. Dispositif selon l'une quelconque des revendications précédentes, **caractérisé en ce que** le dispositif de commande électronique (9) et l'organe de fermeture (4) sont conçus de telle sorte que l'organe de fermeture (4) est ponctuellement complètement fermé et ensuite partiellement ou complètement réouvert, dans lequel un contrôle a lieu pour déterminer si, aussitôt après la réouverture de l'organe de fermeture (4), le débitmètre à turbine ou à ailettes (5) délivre momentanément des impulsions au dispositif de commande électronique (9), et ferme l'organe de fermeture (4) lorsque le nombre d'impulsions dépasse une valeur limite prédéterminée.

13. Système de traitement de l'eau, en particulier installation d'eau domestique, équipé d'un dispositif (1) de fermeture automatique d'un tuyau flexible ou d'une canalisation (2, 3) selon l'une quelconque des revendications précédentes.

14. Procédé d'exploitation d'un dispositif (1) de fermeture automatique d'un tuyau flexible et/ou d'une canalisation (2, 3) pour le transport de milieux liquides ou gazeux selon l'une quelconque des revendications précédentes, **caractérisé en ce que** la valeur de débit du débitmètre à turbine ou à ailettes (5) est améliorée par l'augmentation de la vitesse d'impact de la turbine et/ou de l'ailette, dans la mesure où le dispositif de commande électronique (1) contrôle l'organe de fermeture (4) pendant les phases d'exploitation du dispositif (1), au cours desquelles aucun débit n'est enregistré par le débitmètre à turbine ou à ailettes (5) dans le dispositif de commande électronique (9), de telle sorte que l'organe de fermeture (4) est fermé au moins ponctuellement partiellement uniquement, c'est-à-dire de manière incomplète, à des fins de contrôle d'une fuite mineure, de sorte qu'un approvisionnement de base en fluide de l'installation en aval demeure maintenu, mais cependant la perte de fluide due à une éventuelle fuite mineure est réduite au minimum.

15. Procédé selon la revendication 14, **caractérisé en ce que** le dispositif de commande électronique (9) dans des phases d'exploitation, au cours desquelles aucun débit n'est enregistré par le débitmètre à turbine ou à ailettes (5) dans le laps de temps précédent d'au moins 1 heure, contrôle l'organe de fermeture (4) à des intervalles de temps prédéterminés et/ou pendant des temps de fermeture partiels prédéfinis, de préférence toutes les 5 h à 50 h pendant 5 s à 1 min, en particulier toutes les 24 h pendant 15 s, de sorte que l'organe de fermeture (4) se ferme partiellement.
